# EUROPÄISCHE PATENTSCHRIFT

(11) **EP 0 695 091 B1**
(45) Veröffentlichungstag und Bekanntmachung des Hinweises auf die Patenterteilung: **23.05.2001**
(21) Anmeldenummer: 95110351.4
(22) Anmeldetag: 03.07.1995
(51) Int. Cl.: H04N 7/01

(54) **Verfahren und Schaltungsanordnung zur Umsetzung einer Eingangsbildfolge auf eine Ausgangsbildfolge mit zeilenrasterabhängiger Bildverarbeitung**
Method of and device for changing a stream of input images into a stream of output images with an image processing depending on the line scan
Méthode et dispositif pour transformer une suite d'images d'entrée en une suite d'images de sortie avec un traitement d'images dépendant du balayage ligne

(30) Priorität: 29.07.1994 DE 4427017
(43) Veröffentlichungstag der Anmeldung: 31.01.1996
(73) Patentinhaber: Micronas Munich GmbH, 81541 München (DE)
(72) Erfinder: Scheffler, Günter, Dipl.-Ing., D-80939 München (DE)
(74) Vertreter: Zedlitz, Peter, Dipl.-Inf.

(56) Entgegenhaltungen:
- EP-A- 0 370 500
- EP-A- 0 597 828
- DE-C- 4 327 779
- US-A- 5 025 496
- US-A- 5 187 575

## Beschreibung

Die Erfindung betrifft ein Verfahren zur Umsetzung eines Eingangsbildsignals, das eine Eingangsfolge von in Zeilen aufgeteilten Bildern enthält, auf ein Ausgangsbildsignal, das eine Ausgangsfolge von in Zeilen aufgeteilten Bildern enthält, bei dem die Zeilenrasterlage von Bildern der Eingangsfolge ermittelt wird und die Umsetzung nach einer ersten Umsetzungsvorschrift unter Auswertung der Zeilenrasterlage durchgeführt wird.

Die Erfindung betrifft außerdem eine Schaltungsanordnung zur Durchführung des Verfahrens.

In heutigen Geräten zur Bildsignalverarbeitung, z. B. Fernsehgeräten, werden Verfahren auf Basis von digitaler Verarbeitung der Bildsignale verwendet, bei denen die Folge der Eingangsbilder auf eine Folge von entsprechend verarbeiteten Ausgangsbildern umgesetzt wird. Durch solche Umsetzungsverfahren kann beispielsweise eine Flimmerreduktion des Bildinhalts, eine Datenkompression oder eine Einblendung eines Kleinbildes in ein Großbild erreicht werden. Bei einer Reihe solcher bekannter Verfahren werden die Bilder in Abhängigkeit von der Zeilenrasterlage der Eingangsbilder unterschiedlich verarbeitet.

Bei der Rasterlagendetektion soll festgestellt werden, ob ein eingangsseitiges Halbbild die geradzahligen Zeilen oder die ungeradzahligen Zeilen eines Bildes enthält. Nach den Fernsehsignalnormen unterscheiden sich bekanntlich zeilenverkämmte Halbbilder in der relativen Lage des Vertikalimpulses innerhalb einer Fernsehzeile. Zur Halbbilddetektion wird deshalb die Phasenlage von Vertikal- zu Horizontalsynchronanteilen des Fernsehsignals ausgewertet.

Eine solche Auswertung führt aber in gewissen Fällen nicht zu einer zuverlässigen Erkennung der Zeilenrasterlage. Einerseits kann es auftreten, daß die eingespeisten Fernsehsignale keine zeilenverkämmten Halbbilder liefern. Dies kann beispielsweise dann auftreten, wenn-computergestützt erzeugte Bilder eingespeist werden sollen. In anderen Fällen kann es auftreten, daß aufgrund von unterschiedlichen Verarbeitungslaufzeiten bei der Erzeugung von Horizontal- und Vertikalimpulsen die Phasenlage verändert wird. Eine Verschiebung der Phasenlage kann auch durch Rausch- oder Jittereinwirkungen entstehen. In solchen Fällen kann es auftreten, daß eine andere als tatsächlich vorliegende Zeilenrasterlage durch das oben angegebene Entscheidungskriterium festgestellt wird. Dies hat zur Folge, daß die Signalverarbeitung bei der Umsetzung der Eingangsbildfolge auf die Ausgangsbildfolge nicht rasterrichtig durchgeführt wird, was im allgemeinen zu relativ starken Bildstörungen führt.

In der US-Patentschrift 5 187 575 ist ein Verfahren zur Umsetzung eines Eingangsbildsignals mit einer Folge von in Zeilen aufgeteilten Bildern auf ein Ausgangsbildsignal, das wiederum eine Folge von in Zeilen aufgeteilten Bildern enthält, beschrieben. Das Verfahren wird verwendet, um Bildsignale von verschiedenformatigen Quellen, insbesondere von Film- oder Videokameras auf das Format der üblichen Fernsehübertragungsnormen umzusetzen. Hierzu wird die Zeilenrasterlage der Bilder der Eingangsbildfolge ermittelt. In Abhängigkeit von den ermittelten Zeilenrasterlagen werden unterschiedliche Umsetzungsvorschriften angewendet.

Die Aufgabe der Erfindung besteht darin, das eingangs genannte Verfahren derart weiterzubilden, daß die Signalverarbeitung auch bei ungünstigen Eingangssignalen möglichst wenig Störeinflüsse erzeugt. Eine weitere Aufgabe besteht darin, eine Schaltungsanordnung, die zur Durchführung des Verfahrens geeignet ist, anzugeben.

Erfindungsgemäß wird diese Aufgabe für das Verfahren dadurch gelöst, daß ein Signal erzeugt wird, durch das ein Maß für die Zuverlässigkeit der Ermittlung der Zeilenrasterlage angegeben wird, daß eine Umschaltung auf eine zweite Umsetzungsvorschrift durchgeführt wird, bei der die ermittelte Zeilenrasterlage nicht berücksichtigt wird, und daß die Umschaltung von der ersten auf die zweite Umsetzungsvorschrift in Abhängigkeit vom Signal ausgeführt wird.

Eine Schaltungsanordnung zur Durchführung des Verfahrens ist in Patentanspruch 7 angegeben.

Bei der Erfindung wird, wenn die Zeilenrasterlage nicht zuverlässig erkennbar ist, auf ein anderes Umsetzungsverfahren umgeschaltet, bei dem keine von der Zeilenrasterlage abhängige Signalverarbeitung auftritt. Im Zusammenhang mit der Flimmerbefreiung in einem Fernsehgerät würde dann zwar die Qualität der Flimmerbefreiung verringert, die Gefahr von wesentlich störenderen Bildverzeichnungen aufgrund von nicht rasterrichtiger Bildverarbeitung wird jedoch vermieden. Insgesamt ergibt sich dabei ein für den Betrachter besserer Bildeindruck.

In Zusammenhang mit Bild-im-Bild-Einblendung ist es zweckmäßig, bei nicht zuverlässiger Rasterlagenerkennung anstelle der Verarbeitung von zeilenverkämmten Halbbildern für das einzublendende Halbbild nur jedes zweite eingangsseitig eingespeiste Halbbild zu verwenden und dieses zweimal hintereinander darzustellen. Für diese Bilddarstellung verringert sich dann zwar die vertikale Auflösung, es treten aber keine durch nicht rasterrichtige Bildverarbeitung erzeugte Bildstörungen auf.

Bei der Datenkompression ist es bei nicht zuverlässiger Rasterlagenerkennung zweckmäßig, von einer Inter-field-Verarbeitung mit Auswertung der Zeilenrasterlage auf eine Intrafield-Verarbeitung ohne Auswertung der Zeilenrasterlage umzuschalten.

Nachfolgend wird die Erfindung anhand der in der Zeichnung dargestellten Figuren im einzelnen näher erläutert. Es zeigen:
- Figur 1: das Prinzipschaltbild einer erfindungsgemäßen Schaltungsanordnung,
- Figur 2: eine Realisierung für die Zuverlässigkeitserkennung mittels eines Zeitfensters und
- Figur 3: eine Realisierung mittels der Überprüfung der Folge der Zuverlässigkeitssignalzustände.

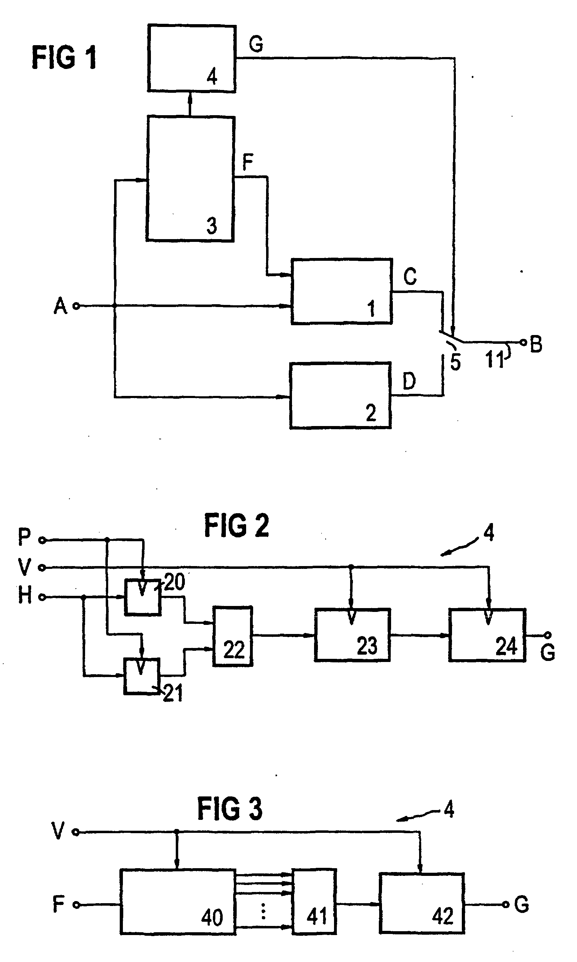

Gemäß Figur 1 wird einer Einrichtung 1 ein Fernsehsignal A zugeführt, das eine Folge von in Zeilen aufgeteilten Bildern enthält. Am Ausgang der Einrichtung 1 ist ein Signal C abgreifbar, das eine nach einer in der Einrichtung 1 durchgeführten Umsetzungsvorschrift erhaltene Folge von Ausgangsbildern enthält. Die Signale A, C können beispielsweise aus mehreren digitalen Teilsignalen für Farb- und Helligkeitsinformation bestehen. Beispielsweise wird in der Einrichtung 1 eine Verarbeitung nach einem Flimmerbefreiungsverfahren ausgeführt. Eine Eingangsbildfolge aus Halbbildern A1, A2, die zeilenverkämmt sind, wird in eine Ausgangs-Halbbildfolge C1, C2, C3, C4 mit verdoppelter Wiedergabefrequenz umgesetzt. Die Eingangshalbbilder A1, A2 weisen verschieden Rasterlagen α bzw. β auf. Das Halbbild A1 enthält beispielsweise die ungeradzahligen Zeilen eines Vollbildes, das Halbbild A2 die geradzahligen Zeilen. Die Halbbilder des Ausgangssignals C werden aus den Halbbildern des Eingangssignals A durch entsprechende Filterverfahren, z. B. Interpolationen, erhalten. Außerdem kann eine Rasterumsetzung vorgesehen werden. Eine besonders gute Flimmerbefreiung liefert ein Wiedergaberaster mit der Folge αβαβ. Dies bedeutet, daß das Ausgangshalbbild C1 im Raster α, das Ausgangshalbbild C2 im Raster β usw. dargestellt wird. Sofern durch die Umsetzungsvorschrift im Ausgangshalbbild C1 Bildinformation des Eingangshalbbildes A1 zu verarbeiten ist, muß der Bildinhalt von A1 auf die Rasterlage β umgerechnet werden. Dies kann beispielsweise durch eine geeignete Interpolation durchgeführt werden.

Zur zeilenrasterabhängigen Verarbeitung der Halbbilder in der Einrichtung 1 muß die Rasterlage der Eingangshalbbilder erkannt werden. Hierzu ist eine Einrichtung 3 vorgesehen, der das Eingangssignal A zugeführt wird und die ein Ausgangssignal F erzeugt, das die Zeilenrasterlage der eingespeisten Halbbilder angibt. Das Signal F wird in der Einrichtung 1 zur rasterrichtigen Verarbeitung gemäß der dort ausgeführten Umsetzungsvorschrift verwendet. In der Einrichtung 3 werden hierzu die Horizontal- und Vertikalsignalanteile des Eingangssignals A in Bezug auf ihre relative Phasenlage ausgewertet. Schaltungen zur Abtrennung der Synchronsignalanteile können bei alternativen Ausgestaltungen auch außerhalb der Einrichtung 3 zur Versorgung von weiteren Schaltungsteilen mit diesen Synchronsignalen angeordnet werden.

Erfindungsgemäß ist eine Einrichtung 4 vorgesehen, durch die festgestellt wird, ob in der Einrichtung 3 eine Zeilenrastererkennung überhaupt zuverlässig durchgeführt werden kann. Die Einrichtung 4 erzeugt hierzu ein Ausgangssignal G, das ein Maß für die Zuverlässigkeit der Ermittlung der Zeilenrasterlage in der Einrichtung 3 angibt. Das Signal G weist zweckmäßigerweise zwei Signalzustände "1" und "0" auf, von denen der eine für zuverlässige und der andere für nicht zuverlässige Ermittlung steht.

Über das Signal G wird ein Umschalter 5 gesteuert. Durch den Umschalter 5 kann zwischen der Ausgangsbildfolge des Signals C und einer anderen Ausgangsbildfolge eines Signals D umgeschaltet werden. Das Signal D wird in einer Einrichtung 2 erzeugt, die ähnlich wie die Einrichtung 1 aus dem Ausgangssignal A ein Ausgangssignal D mit einer Bildfolge erzeugt. Die Umsetzung der Eingangs- auf die Ausgangsbildfolge wird hier nach einer im Vergleich zur Einrichtung 1 anderen Umsetzungsvorschrift ausgeführt. Bei der in der Einrichtung 2 verwendeten Umsetzungsvorschrift spielt die durch das Signal F angezeigte Rasterlage der Eingangshalbbilder keine Rolle. Wenn durch das Signal G die Zeilenrasterlagenerkennung als zuverlässig angegeben wird, ist der Ausgangsanschluß 11 mit dem Ausgang der Einrichtung 1 verbunden, im anderen Fall mit dem Ausgang der Einrichtung 2.

Während in der Einrichtung 1 ein Flimmerreduktionsverfahren unter Anwendung der vom Signal F angegebenen Rasterlage ausgeführt wird, wird in der Einrichtung 2 ein Flimmerverfahren ohne Rasterlagenauswertung durchgeführt. Für die Einrichtung empfiehlt sich zweckmäßigerweise ein Flimmerreduktionsverfahren, bei dem die Ausgangs-Halbbildfolge Dl, D2, D3, D4 im Raster ααββ wiedergegeben wird. Für die Halbbilder D1, D3 werden dann die eingangsseitigen Halbbilder A1, A2 unverändert übernommen und unmittelbar darauffolgend noch einmal als Halbbilder D2, D4 in gleicher Rasterlage wiederholt. Die von der Einrichtung 2 ausgeführte Flimmerbefreiung weist eine niedrigere Qualität als die von der Einrichtung 1 ausgeführte auf. Dieser geringfügige Qualitätsverlust übersteigt aber bei weitem die Gefahr von starken Bildverzeichnungen, die auftreten würden, wenn die Halbbildumsetzung in der Einrichtung 1 mit fehlerhaften Rasterlagewerten des Signals F durchgeführt würde. Deshalb wird im Fall einer unsicheren Rasterlagenerkennung mittels der Einrichtung 4 und des Signals G vom Signalverarbeitungszweig 1 auf den Signalverarbeitungszweig 2 umgeschaltet.

Die Figur 2 zeigt eine Realisierung der Einrichtung 4 gemäß einem ersten Verfahren zur Bewertung der Zuverlässigkeit der Rasterlagenerkennung. Wie bereits oben ausgeführt, wird zur Rasterlagenerkennung die Phasenlage zwischen Horizontal- und Vertikalsynchronsignalanteilen des Videosignals ausgewertet. Gemäß dieser ersten Ausführungsform des Verfahrens wird zur Feststellung der Zuverlässigkeit der Rasterlagenerkennung ein Zeitfenster im Bereich der Horizontalimpulse erzeugt. Liegt der Vertikalimpuls außerhalb des Zeitfensters, dann wird eine zuverlässige Rasterlagenerkennung in der Einrichtung 3 angenommen. Liegt der Vertikalimpuls zumindest zum Teil innerhalb des Zeitfensters, wird angenommen, daß die Rasterlagenerkennung nicht eindeutig und nicht zuverlässig genug möglich ist. Da der Horizontalimpuls im wesentlichen durch seine in Zeitrichtung erste Flanke festgelegt wird, ist es zweckmäßig, das Zeitfenster an die erste Flanke zu koppeln. Zweckmäßigerweise ist das Zeitfenster um die erste Flanke zentriert. Es empfiehlt sich, das Zeitfenster, das an den nachfolgenden Horizontalimpuls gekoppelt sein soll, in seiner Lage durch das Auftreten des vorhergehenden Horizontalimpulses, insbesondere seiner ersten Flanke, festzulegen. Hierzu ist es zweckmäßig, mit dem Auftreten der ersten Flanke des vorhergehenden Horizontalimpulses eine Zeitverzögerung zu starten, bei deren Ablauf der Beginn des dem nachfolgenden Horizontalimpuls zugeordnete Zeitfenster festgelegt wird. Das Ende des Zeitfensters kann durch eine entsprechende Verzögerung oder durch einen Impulsgeber, der einen Impuls vorbestimmter Länge abgibt, erzeugt werden. Zum Festlegen der Zeitverzögerung können mit der Bildpunktfrequenz getaktete Zähler verwendet werden. Solche Zähler sind üblicherweise in Einrichtungen zur digitalen Verarbeitung von Fernsehsignalen enthalten.

Das Realisierungsbeispiel nach Figur 2 zur Erzeugung des Zeitfensters ist folgendermaßen aufgebaut. Zwei Zähleinrichtungen 20, 21 werden mit dem Bildpunkttakt P hochgezählt. Sie sind auf den Horizontalimpuls H synchronisiert. Ein Speicherelement 22 wird durch den Zähler 20 gesetzt und durch den Zähler 21 wieder rückgesetzt. Der Ausgang des Flip-Flops 22 erzeugt dann ein Signal zur Festlegung des Zeitfensters. Das Fenstersignal wird auf den Dateneingang eines vom Vertikalimpuls V gesteuerten Flip-Flops 23 gelegt. Am Ausgang des Flip-Flops 23 liegt dann ein Signal vor, das angibt, ob der Vertikalimpuls V innerhalb oder außerhalb des Zeitfensters liegt.

Vorteilhafterweise ist dem Flip-Flop 23 eine Hystereseeinrichtung 24 nachgeschaltet, durch die eine Hysterese über mehrere Halbbilder gebildet wird. Die Zuverlässigkeitsüberprüfung wird dadurch gegenüber zufälligen und/oder kurzzeitig auftretenden Signalstörungen stabilisiert. Als Hystereseeinrichtung 24 kann beispielsweise ein Zähler dienen, der mit dem Vertikalimpuls getaktet wird, vom Ausgang des Flip-Flops 23 in der Zählrichtung gesteuert wird und ausgangsseitig eine Schwellenentscheidung vornimmt.

Die Realisierung einer anderen Ausführungsform des erfindungsgemäßen Verfahrens, die andere Verfahrensschritte zur Erzeugung des Zuverlässigkeitssignals G enthält, ist in Figur 3 gezeigt. Bei dieser Ausführungsform ist notwendig, daß die eingangsseitige Halbbildfolge des Signals A eine vorbestimmte Folge von Zeilenrasterlagen aufweist. Beispielsweise liefert das Signal A zeilenverkämmte Halbbilder deren Rasterlage alternierend wechselt. Dies entspricht der üblichen Form der Fernsehsignalübertragung mit Zeilensprung. Nach dieser Ausführung des Verfahrens wird die im Signal F erzeugte Folge von festgestellten Rasterlagewerten überprüft. Es wird festgestellt, ob tatsächlich die eingangsseitig eingespeiste Folge von Zeilenrasterlagen vorliegt. Im beschriebenen Beispiel wird festgestellt, ob tatsächlich eine alternierende Folge von Rasterlagen feststellbar ist. Ist dies der Fall, kann man annehmen, daß die Rasterlagenerkennung zuverlässig arbeitet.

Zur Realisierung dieser Ausführung der Einrichtung 4 ist ein Schieberegister 40 vorgesehen, dem die Rasterlagensignale F zugeführt werden. Das Schieberegister 40 wird mit dem Vertikalimpuls V getaktet. Der im Schieberegister 40 gespeicherte Abschnitt der Folge der Signalzustände des Signals F wird in einer Gatterlogik 41 dahingehend ausgewertet, ob alternierende Zustände vorliegen. Am Ausgang der Einrichtung 41 kann abgegriffen werden, ob der im Schieberegister 40 gespeicherte Abschnitt der Folge alternierende Zustände aufweist. Dies zeigt an, daß die Rasterlagenerkennung zuverlässig ist. Zweckmäßigerweise findet sich auch hier eine Hystereseeinrichtung 42 entsprechend der Einrichtung 24 nach Figur 2.

## Patentansprüche

1. Verfahren zur Umsetzung eines Eingangsbildsignals (A), das eine Eingangsfolge von in Zeilen aufgeteilten Bildern enthält, auf ein Ausgangsbildsignal (B), das eine Ausgangsfolge von in Zeilen aufgeteilten Bildern enthält, bei dem die Zeilenrasterlage von Bildern der Eingangsfolge ermittelt wird und die Umsetzung nach einer ersten Umsetzungsvorschrift unter Auswertung der Zeilenrasterlage durchgeführt wird,
**dadurch gekennzeichnet**, daß
ein Signal (G) erzeugt wird, das ein Maß für die Zuverlässigkeit der Ermittlung der Zeilenrasterlage darstellt, daß eine Umschaltung auf eine zweite Umsetzungsvorschrift durchgeführt wird, bei der die ermittelte Zeilenrasterlage nicht berücksichtigt wird, und daß die Umschaltung von der ersten auf die zweite Umsetzungsvorschrift in Abhängigkeit vom Signal (G) ausgeführt wird.

2. Verfahren nach Anspruch 1,
**dadurch gekennzeichnet**, daß
die Zeilenrasterlage durch Auswertung der Phasenlage eines im Eingangsbildsignal (A) enthaltenen Vertikalimpulses (V) zu einem im Eingangsbildsignal enthaltenen Horizontalimpuls (H) ermittelt wird und daß zur Ermittlung des Signals (G) festgestellt wird, ob der Vertikalimpuls (V) innerhalb eines Zeitfensters liegt, dessen zeitliche Lage an den Horizontalimpuls (H) gekoppelt ist.

3. Verfahren nach Anspruch 2,
**dadurch gekennzeichnet**, daß
der Beginn des Zeitfensters durch den Ablauf einer Zeitverzögerung festgelegt wird, die durch einen weiteren Horizontalimpuls gestartet wird, der dem Horizontalimpuls vorausgeht.

4. Verfahren nach Anspruch 2 oder 3,
**dadurch gekennzeichnet**, daß
das Zeitfenster an die in Zeitrichtung erste Flanke des Horizontalimpulses (H) gekoppelt ist.

5. Verfahren nach Anspruch 1,
**dadurch gekennzeichnet**, daß
die Eingangsfolge der Bilder des Eingangsbildsignals (A) Bilder mit einer ersten und einer zweiten Zeilenrasterlage enthält, wobei die Folge der Zeilenrasterlagen vorbestimmt ist, daß die Zeilenrasterlage jedes Bildes eines Abschnitts der Folge ermittelt wird und daß zur Erzeugung des Signals (G) die Folge der ermittelten Zeilenrasterlagen abschnittsweise dahingehend überprüft wird, ob die vorbestimmte Folge der Zeilenrasterlage vorliegt.

6. Verfahren nach einem der Ansprüche 1 bis 5,
**dadurch gekennzeichnet**, daß
das Signal (G) einen ersten Signalzustand für ein hohes Zuverlässigkeitsmaß und einen zweiten Signalzustand für ein niedriges Zuverlässigkeitsmaß aufweist und daß das Umschalten vom ersten in den zweiten Signalzustand und umgekehrt mit einer über mehrere Bilder der Eingangsfolge wirkenden Hysterese ausgeführt wird.

7. Schaltungsanordnung zur Durchführung des Verfahrens nach einem der Ansprüche 1 bis 6, enthaltend:
- eine Halbbilddetektionseinrichtung (3), der das Eingangsbildsignal (A) zuführbar ist und die ein Zeilenrastersignal erzeugt,
- einer Einrichtung zur Umsetzung der Eingangsfolge auf die Ausgangsfolge, der das Eingangsbildsignal zuführbar ist und von der das Ausgangsbildsignal (B) abgreifbar ist und die einen ersten Signalverarbeitungspfad (1) enthält, durch den die Eingangsfolge mittels der ersten Umsetzungsvorschrift auf die Ausgangsfolge umsetztbar ist,
**dadurch gekennzeichnet**, daß
- eine Einrichtung (4) zur Erzeugung des Signals (G) vorgesehen ist, der das Eingangsbildsignal (A) zuführbar ist und durch die das Signal (G) erzeugbar ist,
- daß die Einrichtung zur Umsetzung der Eingangsbildfolge auf die Ausgangsbildfolge einen Anschluß für das Signal (G) aufweist, einen zweiten Signalverarbeitungspfad (2), dem eingangsseitig das Eingangsbildsignal zuführbar ist, und einen Umschalter (5), durch den zwischen den beiden Signalverarbeitungspfaden (1, 2) ausgangsseitig in Abhängigkeit von dem Signal (G) umschaltbar ist.

8. Schaltungsanordnung nach Anspruch 7,
**dadurch gekennzeichnet**, daß
die Einrichtung (4) zur Erzeugung des Signals (G) enthält: ein Impulserzeugungsmittel (20, 21, 22), durch das ein Impuls vorgegebenener Länge erzeugt wird, der an eine Flanke des Horizontalimpulses (H) gekoppelt ist, und ein Abfragemittel (23), durch das ein erster Signalzustand des Signals erzeugt wird, wenn ein Vertikalimpuls (V) zumindest teilweise innerhalb des Impulses vorgegebener Länge auftritt, und ein zweiter Signalzustand, wenn der Vertikalimpuls außerhalb des Impulses vorgegebener Länge auftritt.

9. Schaltungsanordnung nach Anspruch 7,
**dadurch gekennzeichnet**, daß
die Einrichtung (4) zur Erzeugung des Signals (G) Mittel (40, 41) enthält, durch die feststellbar ist, daß ein Abschnitt einer Folge von aufeinander folgenden Zeilenrastersignalzuständen einer vorbestimmten Sollfolge entspricht.

10. Schaltungsanordnung nach einem der Ansprüche 7 bis 9,
**dadurch gekennzeichnet**, daß
die Einrichtung (4) zur Erzeugung des Signals (G) ausgangsseitig eine Hystereseeinrichtung (24, 42) enthält, die eine über mehrere Bilder wirkende Hystere ausführt.

## Claims

1. Method for converting an input picture signal (A), which contains an input sequence of pictures divided into lines, into an output picture signal (B), which contains an output sequence of pictures divided into lines, in which the line raster position of pictures of the input sequence is determined and the conversion is carried out according to a first conversion specification with evaluation of the line raster position,
characterized in that
a signal (G) is generated, which represents a measure of the reliability of the determination of the line raster position, in that a changeover is made to a second conversion specification, in which the line raster position that has been determined is not taken into account, and in that the changeover from the first to the second conversion specification is carried out in a manner dependent on the signal (G).

2. Method according to Claim 1,
characterized in that
the line raster position is determined by evaluating the phase angle of a vertical pulse (V) contained in the input ' picture signal (A) with respect to a horizontal pulse (H) contained in the input picture signal, and in that, in order to determine the signal (G), it is ascertained whether the vertical pulse (V) lies within a time window whose temporal position is coupled to the horizontal pulse (H).

3. Method according to Claim 2,
characterized in that
the beginning of the time window is defined by the expiry of a time delay which is started by a further horizontal pulse preceding the horizontal pulse.

4. Method according to Claim 2 or 3,
characterized in that
the time window is coupled to the first edge of the horizontal pulse (H) in the time direction.

5. Method according to Claim 1,
characterized in that
the input sequence of pictures of the input picture signal (A) contains pictures having a first and a second line raster position, the sequence of the line raster positions being predetermined, in that the line raster position of each picture of a section of the sequence is determined, and in that, in order to generate the signal (G), the sequence of line raster positions that have been determined is checked section by section to see whether the predetermined sequence of the line raster position is present.

6. Method according to one of Claims 1 to 5,
characterized in that
the signal (G) has a first signal state for a high measure of reliability and a second signal state for a low measure of reliability, and in that the changeover from the first to the second signal state, and vice versa, is carried out with a hysteresis acting over a plurality of pictures of the input sequence.

7. Circuit arrangement for carrying out the method according to one of Claims 1 to 6, containing:
- a field detection device (3), to which the input picture signal (A) can be fed and which generates a line raster signal,
- a device for converting the input sequence into the output sequence, to which the input picture signal can be fed and from which the output picture signal (B) can be tapped off and which contains a first signal processing path (1), by means of which the input sequence can be converted into the output sequence using the first conversion specification,
characterized in that
- a device (4) for generating the signal (G) is provided, to which the input picture signal (A) can be fed and by which the signal (G) can be generated,
- in that the device for converting the input picture sequence into the output picture sequence has a connection for the signal (G), a second signal processing path (2), to which the input picture signal can be fed on the input side, and a changeover switch (5), which can effect a changeover between the two signal processing paths (1, 2) on the output side in a manner dependent on the signal (G).

8. Circuit arrangement according to Claim 7,
characterized in that
the device (4) for generating the signal (G) contains:
a pulse generating means (20, 21, 22), which generates a pulse of predetermined length, which pulse is coupled to an edge of the horizontal pulse (H), and an interrogation means (23), which generates a first signal state of the signal if a vertical pulse (V) occurs at least partially within the pulse of predetermined length, and a second signal state if the vertical pulse occurs outside the pulse of predetermined length.

9. Circuit arrangement according to Claim 7,
characterized in that
the device (4) for generating the signal (G) contains means (40, 41) which can be used to ascertain that a section of a sequence of successive line raster signal states corresponds to a predetermined desired sequence.

10. Circuit arrangement according to one of Claims 7 to 9,
characterized in that
the device (4) for generating the signal (G) contains, on the output side, a hysteresis device (24, 42), which implements a hysteresis acting over a plurality of pictures.

## Revendications

1. Procédé pour transformer un signal d'image d'entrée (A), qui contient une séquence d'entrée d'images décomposées en lignes, en un signal d'images de sortie (B), qui contient une séquence de sortie d'images décomposées en lignes, procédé dans lequel on détermine la position de balayage lignes d'images de la séquence d'entrée et on effectue la transformation selon une première règle de transformation en exploitant la position de balayage lignes, caractérisé par le fait qu'on produit un signal (G) qui donne une mesure de la fiabilité de la détermination de la position de balayage lignes, qu'on effectue une commutation sur une deuxième règle de transformation lors de laquelle la position de balayage lignes déterminée n'est pas prise en compte et qu'on exécute la commutation de la première à la deuxième règle de transformation en fonction du signal (G).

2. Procédé selon la revendication 1, caractérisé par le fait qu'on détermine la position de balayage lignes en exploitant la relation de phase d'une impulsion verticale (V) contenue dans le signal d'image d'entrée (A) par rapport à une impulsion horizontale (H) contenue dans le signal d'image d'entrée et que, pour la détermination du signal (G), on détermine si l'impulsion verticale (V) se trouve à l'intérieur d'une fenêtre temporelle dont la position temporelle est couplée à l'impulsion horizontale (H).

3. Procédé selon la revendication 2, caractérisé par le fait qu'on fixe le début de la fenêtre temporelle par l'expiration d'un délai qui est déclenché par une autre impulsion horizontale qui précède l'impulsion horizontale.

4. Procédé selon la revendication 2 ou 3, caractérisé par le fait qu'on couple la fenêtre temporelle au premier flanc, dans le sens du temps, de l'impulsion horizontale (H).

5. Procédé selon la revendication 1, caractérisé par le fait que la séquence d'entrée des images du signal d'image d'entrée (A) contient des images avec une première position de balayage lignes et avec une deuxième position de balayage lignes, la séquence des positions de balayage lignes étant prédéterminée, qu'on détermine la position de balayage lignes de chaque image d'une section de la séquence et que, pour produire le signal (G), on contrôle la séquence des positions de balayage lignes déterminées section par section pour vérifier si on a la séquence prédéterminée de la position de balayage lignes.

6. Procédé selon l'une des revendications 1 à 5, caractérisé par le fait que le signal (G) a un premier état de signal pour une grande valeur mesurée de fiabilité et un deuxième état de signal pour une petite valeur mesurée de fiabilité et qu'on effectue la commutation du premier état de signal au deuxième état de signal et inversement avec une hystérésis agissant sur plusieurs images de la séquence d'entrée.

7. Montage pour la mise en oeuvre du procédé selon l'une des revendications 1 à 6, contenant :
- un dispositif de détection de trame (3) auquel peut être envoyé le signal d'image d'entrée (A) et qui produit un signal de balayage lignes,
- un dispositif qui est destiné à la transformation de la séquence d'entrée en la séquence de sortie, auquel peut être envoyé le signal d'image d'entrée, auquel peut être prélevé le signal d'image de sortie (B) et qui contient un premier chemin de traitement de signal (1) par lequel la séquence d'entrée est transformable en la séquence de sortie au moyen de la première règle de transformation,
caractérisé par le fait
- qu'il est prévu un dispositif (4) qui est destiné à produire le signal (G), auquel peut être envoyé le signal d'image d'entrée (A) et par lequel peut être produit le signal (G),
- que le dispositif pour la transformation de la séquence d'image d'entrée en la séquence d'image de sortie comporte une borne pour le signal (G), un deuxième chemin de traitement de signal (2) auquel le signal d'image d'entrée peut être envoyé côté entrée et un commutateur (5) par lequel on peut commuter côté sortie entre les deux chemins de traitement de signal (1, 2) en fonction du signal (G).

8. Montage selon la revendication 7, caractérisé par le fait que le dispositif (4) pour la production du signal (G) contient : un moyen de production d'impulsion (20, 21, 22), par lequel est produite une impulsion d'une longueur prédéterminée qui est couplée à un flanc de l'impulsion horizontale (H), et un moyen d'interrogation (23), par lequel est produit un premier état du signal si une impulsion verticale (V) arrive au moins en partie à l'intérieur de l'impulsion de longueur prédéterminée et un deuxième état du signal si l'impulsion verticale arrive en dehors de l'impulsion de longueur prédéterminée.

9. Montage selon la revendication 7, caractérisé par le fait que le dispositif (4) pour la production du signal (G) contient des moyens (40, 41) par lesquels on peut déterminer qu'une section d'une séquence d'états de signal de position de balayage successifs correspond à une séquence de consigne prédéterminée.

10. Montage selon l'une des revendications 7 à 9, caractérisé par le fait que le dispositif (4) pour la production du signal (G) contient côté sortie un dispositif à hystérésis (24, 42) qui met en oeuvre une hystérésis agissant sur plusieurs images.
